# EUROPEAN PATENT APPLICATION

(11) **EP 1 978 331 A2**
(43) Date of publication of application: **08.10.2008**
(21) Application number: 08103295.5
(22) Date of filing: 01.04.2008
(51) Int. Cl.: G01C 19/56

(54) **Methods and systems for driver noise reduction in a mems gyro**

(30) Priority: 02.04.2007 US 695512
(71) Applicant: Honeywell International Inc., Morristown NJ 07960 (US)
(72) Inventor: Belt, Ronald A., Plymouth, MN 55447 (US); Mueller, Jon H., Richfield, MN 55423 (US)
(74) Representative: Buckley, Guy Julian

(57) **Abstract**

Systems and methods for reducing driver noise in a MicroElectro-Mcchanical Systems (MEMS) gyroscope system arc disclosed. An example system includes motor drivers, two proof masses, two substrate electrodes, two motor drive capacitors, and two stationary capacitors. The motor drivers drive the proof masses through the motor driver capacitors. The stationary capacitors output a signal based on the drive signal from the motor drivers. A differential amplifier receives a sense signal from the proof masses and a noise signal from the stationary capacitors, and subtracts the noise signal from the rate sense signal, thereby producing a sense signal with reduced driver noise.

## Description

### BACKGROUND OF THE INVENTION

In MicroElectro-Mechanical Systems (MEMS) gyros, electrical noise mixed in a non-linear component with the second harmonic of the motor drive signal that gets into the rate channel (herein called "Penguin" noise) is one of the biggest yield problems. The motor drive capacitors act like a summing circuit that sums the two drive signals, allowing them to cancel (almost) completely, leaving the noise superimposed on a DC level at the MID potential. One solution is to sum the same two drive signals external to the sensor by using two 20K resistors and then running the sum through a 1 pF capacitor into the unused input of the charge amp. The signal on the unused input is then subtracted from the signal on the main charge amp input by treating it as a common mode signal. This fix would work perfectly if the two signals were exactly the same size. Unfortunately, this is difficult to arrange because the external components vary in value, and the correct values to begin with are not known. Trimming one of the resistor values to get better cancellation is possible, but is discouraged because this adds to the production cost of the gyro

Therefore, there exists a need for efficiently and effectively removing noise and/or the second harmonic from the rate input of the gyro.

### SUMMARY OF THE INVENTION

This invention solves the "Penguin" noise problem in tuning fork gyros by placing copies of the motor drive capacitors elsewhere on the sensor die to create a "dummy proof mass." The capacitor copies are a non-movable but electrical equivalent of the true proof mass. Then, if the stationary capacitors of the "dummy proof mass" are activated using the same drive signals as the main motor drive capacitors and the output of the "dummy proof mass" is run into an unused input of the charge amplifier, a near-perfect replica of the noise signal on the main proof mass is generated. The stationary capacitors of the "dummy proof mass" have the same dimensions as the motor drive capacitors of the true proof mass.

When this invention is used, it is not necessary to use components outside the sensor, (the gyro board), to do the "Penguin" noise cancellation functions. This saves board area and reduces gyro costs. It also allows using driver components that have intrinsic noise on their outputs without screening the devices to eliminate such intrinsic noise.

### BRIEF DESCRIPTION OF THE DRAWINGS

Preferred and alternative embodiments of the present invention are described in detail below with reference to the following drawings:

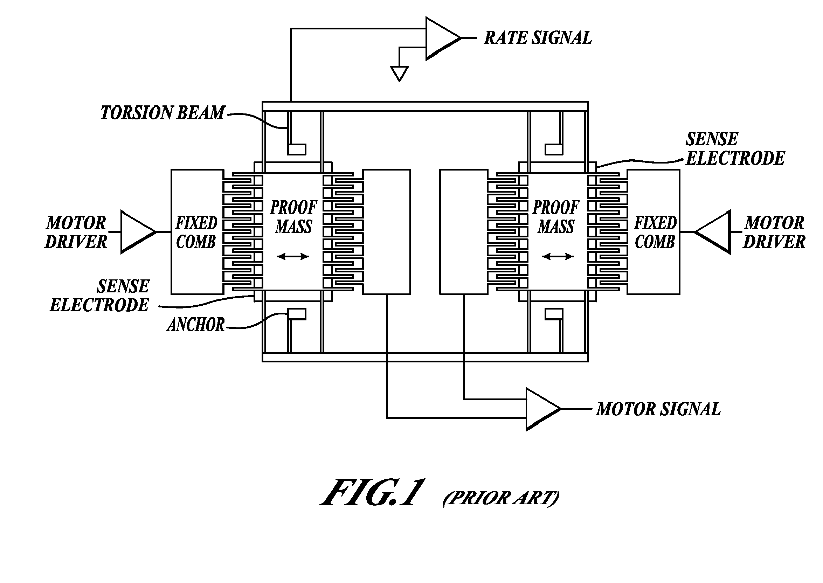

FIGURE 1 illustrates a top view of an example MicroElectro-Mechanical Systems (MEMS) gyro formed in accordance with the prior art;

FIGURE 2 illustrates a schematic diagram of an example system formed in accordance with an embodiment of the present invention; and

FIGURE 3 illustrates a partial schematic diagram of a MEMS gyro formed in accordance with an embodiment of the present invention.

### DETAILED DESCRIPTION OF THE PREFERRED EMBODIMENT

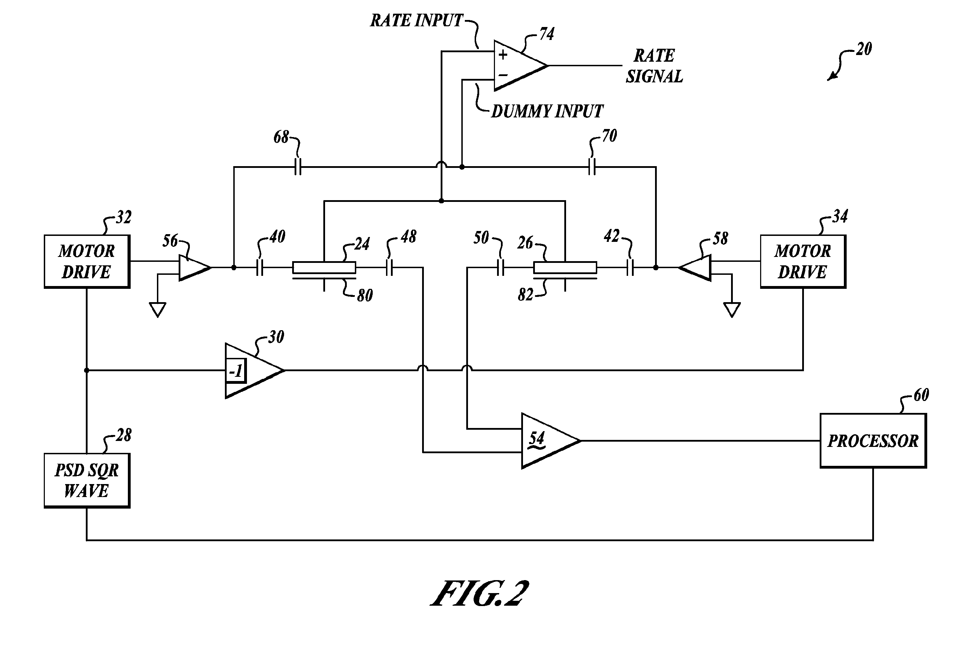

FIGURE 2 illustrates an example MicroElectro-Mechanical Systems (MEMS) gyro system 20 formed in accordance with an embodiment of the present invention. The system 20 includes a tuning fork gyro that includes two proof masses 24 and 26. Each proof mass 24, 26 includes a motor drive and motor sense side. On the motor drive side motor drive capacitors 40, 42 are formed, respectively. The motor drive capacitors 40, 42 are connected either directly or via coupling capacitors (not shown) to the output of drive amplifiers 56, 58 that receive a signal from a motor drive component 32, 34, respectively. The motor drive components 32, 34 are connected to a processor 60. The processor 60 generates a motor drive signal for instructing the motor drive components 32, 34 to properly output a signal for resonating the proof masses 24, 26 using the motor drive capacitors 40, 42. The processor 60 generates the drive signal based on a combination of motor sense signals (amp 54) received from the motor sense side of the proof masses 24, 26 via capacitors 48, 50.

Each of the motor drive components 32 and 34 receives a square wave signal from a square wave generator 28. Before the second motor drive component 34 receives the signal from generator 28, the signal is inverted by an inverter 30, creating what is referred to as complementary motor drive to the gyro. This insures that the lateral (X-axis) motions of the proof masses 24, 26 resonate equal and opposite (out of phase) of each other. Connected between the drive amplifiers 56 and 58 and their respective motor drive capacitors 40 and 42 are first ends of stationary capacitors 68 and 70, respectively. The value of the stationary capacitors 68 and 70 are preferably equal in capacitance to their corresponding capacitors 40, 42.

The system 20 also includes rate sense electrodes 80, 82 that are located on a substrate of the system 20 (or below the proof masses 24, 26, respectively). The rate sense electrodes 80, 82 are biased to a predefined voltage. The proof masses 24 and 26 are electrically conductive (doped) to form a capacitor with the rate sense electrodes 80, 82. The proof masses 24, 26 are electrically connected to a differential amplifier or subtractor 74, which may alternatively consist of two charge amplifiers followed by a differential amplifier. The subtractor 74 also is connected with the stationary capacitors 68, 70. The subtractor 74 subtracts the combined signal of the stationary capacitors 68, 70 from the combined signal from the proof masses 24, 26. Because the stationary capacitors 68, 70 are comparable in capacitance to their respective motor capacitors 40, 42, they produce a similar noise signal. Therefore, because the noise signal that is experienced by the motor drive capacitors 40, 42 couples into the sense signal (the signal outputted by the proof masses 24, 26), then the subtractor 74 removes the noise signal from the generated sense signal.

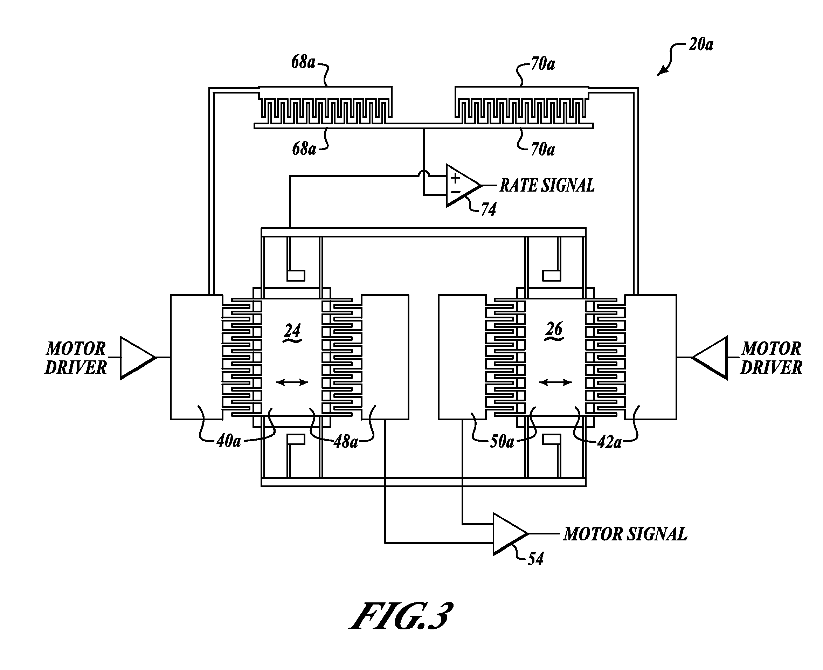

FIGURE 3 illustrates an example top-down view of an example system 20a. The system 20a includes stationary capacitors 68a, 70a that in this example are comb capacitors formed with the same dimensions and number of tines as motor drive capacitors 40a, 42a. The stationary capacitors 68a, 70a are preferably formed at the same time in the manufacturing process as the motor drive and motor sense capacitors 40a, 42a, 48a, 50a. The stationary capacitors 68a, 70a are formed on the same chip/substrate as the fixed combs of motor drive capacitors 40a, 42a. By constructing the stationary capacitors 68a, 70a at the same time as construction of the motor drive capacitors 40a, 42a, the stationary capacitors 68a, 70a are identical to the motor drive capacitors 40a, 42a.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A method for driver noise reduction in a MicroElectro-Mechanical Systems (MEMS) gyroscope having one or more proof masses and one or more substrate electrodes, the method comprising:
sending a motor drive signal to at least one motor drive capacitor and at least one stationary capacitor;
receiving a sense signal from one of the one or more proof masses or the one or more substrate electrodes and a signal from the at least one stationary capacitor; and
subtracting the signal from the at least one stationary capacitor from the sense signal, thereby producing a rate signal with reduced driver noise.

2. The method of Claim 1, wherein the at least one stationary capacitor has a capacitance nearly equal in value to an associated motor drive capacitor.

3. The method of Claim 2, wherein the motor drive and stationary capacitors are comb capacitors.

4. A MicroElectro-Mechanical Systems (MEMS) gyroscope system for reducing driver noise, the system comprising:
motor drive components configured to generate motor drive signals;
at least one proof mass;
at least one substrate electrode;
at least one motor drive capacitor configured to receive one of the generated motor drive signals and drive the at least one proof mass;
at least one stationary capacitor configured to receive the generated drive signal and output a signal; and
a component configured to receive a sense signal from one of the one or more proof masses or the one or more substrate electrodes and subtract the signal from the at least one stationary capacitor from the sense signal, thereby producing a sense signal with reduced driver noise.

5. The system of Claim 4, wherein the at least one stationary capacitor has a capacitance nearly equal in value to an associated motor drive capacitor.

6. The system of Claim 5, wherein the drive and stationary capacitors are comb capacitors.

7. The system of Claim 6, wherein the motor drive capacitors and stationary capacitors are identical in dimensions and construction.
